# DEMANDE DE BREVET EUROPEEN

(11) **EP 3 643 935 A1**
(43) Date de publication de la demande: **29.04.2020**
(21) Numéro de dépôt: 19203901.4
(22) Date de dépôt: 17.10.2019
(51) Int. Cl.: F16C 29/00, F16C 29/02

(54) **GLISSIÈRE À FROTTEMENT SEC À SURFACES DE CONTACT INCLINÉES**

(30) Priorité: 22.10.2018 FR 1871252
(71) Demandeur: Airbus Operations, 31060 Toulouse (FR)
(72) Inventeur: POUPON, Cédric, 31770 COLOMIERS (FR); CAZEAUX, Laurent, 31170 TOURNEFEUILLE (FR)
(74) Mandataire: Santarelli

(57) **Abrégé**

L'invention porte sur une glissière comportant un chariot (1), un guide (2), et des patins (3) interposés permettant la translation du chariot (1) selon une direction longitudinale (x) par glissement relatif des patins (3) sur des surfaces de contact réparties symétriquement de part et d'autre de deux plans : un plan horizontal (P1) parallèle à la direction longitudinale (x) et la direction transversale (y) et un plan médian (P2) parallèle à la direction longitudinale (x) et la direction verticale (z). Les surfaces de contact sont orientées de sorte à former un angle (α) compris entre 30° et 70° avec ledit plan horizontal (P1). Cela permet une répartition des pressions de contact plus homogène, qui tend à recentrer le chariot dans son guide, et l'usure des patins est plus régulière entre les patins. Une telle glissière présente en outre un avantage important pour le contrôle et le suivi de l'usure des patins.

## Description

La présente invention concerne le domaine des glissières à frottement sec. Les glissières à frottement sec sont des dispositifs mécaniques permettant de réaliser une liaison glissière, c'est-à-dire une liaison mécanique ne permettant qu'un mouvement de translation dans la direction de la liaison.

Parmi les technologies connues de glissières, les glissières à frottement sec se distinguent des glissières dites à éléments roulants, par exemple des glissières à billes, en ce qu'elles mettent en œuvre le frottement de patins sur une surface de contact pour permettre le mouvement de translation et en particulier son guidage.

Elles présentent l'avantage de pouvoir fonctionner correctement, de manière fiable, en présence de contaminants, par exemple en présence de poussières abrasives ou de fluide potentiellement agressif.

De telles glissières sont couramment utilisées dans de nombreux domaines industriels, notamment pour des applications aéronautiques.

Un exemple d'application concerne le guidage des mécanismes de commande de volets inverseurs dans un turboréacteur à double flux. Cet exemple est développé ci-après à titre d'illustration de l'invention. La présente invention est cependant applicable à toute glissière à frottement sec.

Une glissière à frottement sec présente cependant l'inconvénient que les patins qu'elle met en œuvre peuvent présenter une usure progressive peu homogène. Cela est dû à une répartition de pression sur les patins qui n'est pas homogène, et augmente d'autant plus l'usure des patins les plus contraints.

La présente invention tend à proposer une glissière à frottement sec, en particulier une glissière à usage aéronautique, résolvant les problématiques de fiabilité liées à l'usure progressive potentiellement irrégulière des patins de la glissière.

Ainsi, l'invention porte sur une glissière à frottement sec comportant un chariot, un guide s'étendant dans une direction longitudinale, et des patins interposés entre le chariot et le guide de sorte à permettre la translation du chariot selon la direction longitudinale par glissement relatif des patins sur des surfaces de contact planes du chariot ou du guide, tout en maintenant ledit chariot fixe dans une direction transversale et dans une direction verticale. La direction longitudinale, la direction transversale et la direction verticale sont orthogonales entre elles. Les surfaces de contact sont réparties symétriquement de part et d'autre de deux plans, à savoir un plan horizontal parallèle à la direction longitudinale et la direction transversale et un plan médian parallèle à la direction longitudinale et la direction verticale. Le chariot enserre verticalement le guide. Les surfaces de contact sont orientées de sorte à former un angle compris entre 30° et 70° avec ledit plan horizontal.

Les surfaces de contact présentent ainsi une orientation permettant de générer une force d'appui, en réaction aux contraintes subies par le chariot de la glissière, ayant une composante verticale et une composante transversale. Cela permet une meilleure répartition des pressions de contact, plus homogène, comparativement à une glissière traditionnelle comportant des patins distincts pour reprendre les efforts verticaux et les efforts transversaux. Par ailleurs, l'usure des patins est plus régulière entre les patins dans la mesure où une force verticale ou une force transversale exercée sur le chariot est reprise par au moins deux patins de la glissière, et ce que la force de réaction générée dans la glissière tend à recentrer le chariot dans son guide.

Les surfaces de contact peuvent être au nombre de quatre.

Le guide peut comporter deux rails parallèles longitudinaux.

Le chariot peut comporter une partie supérieure et une partie inférieure liées entre elles par des moyens de liaison configurés de sorte à exercer une force de précontrainte selon la direction verticale tendant à rapprocher la partie supérieure et la partie inférieure l'une de l'autre, le guide étant interposé entre ladite partie supérieure et ladite partie inférieure.

La partie supérieure et la partie inférieure peuvent être symétriques selon ledit plan horizontal.

La glissière peut comporter un capteur permettant de mesurer la force ou de caractériser l'évolution de la force de précontrainte.

La partie supérieure et la partie inférieure peuvent être liées par au moins une vis ou un goujon, la vis ou le goujon étant du type instrumenté de sorte à former un capteur de force, ou étant équipé d'un capteur de force de type rondelle.

Les moyens de liaison peuvent être équipés d'un ressort de précontrainte, par exemple d'une rondelle ressort.

Les surfaces de contact peuvent être orientées de sorte à former un angle d'environ 45°avec ledit plan horizontal.

L'invention porte aussi sur un mécanisme d'actionnement d'un volet mobile d'aéronef comportant une glissière telle que précédemment définie.

D'autres particularités et avantages de l'invention apparaîtront encore dans la description ci-après.
Aux dessins annexés, donnés à titre d'exemples non limitatifs :
- la figure 1 représente, selon un schéma de principe en deux dimensions, un exemple d'application d'une glissière à frottement sec ;
- la figure 2 représente, selon une vue schématique en coupe transversale, une glissière à frottement sec conforme à l'art antérieur ;
- la figure 3 représente une glissière à frottement sec conforme à un mode de réalisation de l'invention, selon une vue schématique en coupe analogue à celle de la figure 2.

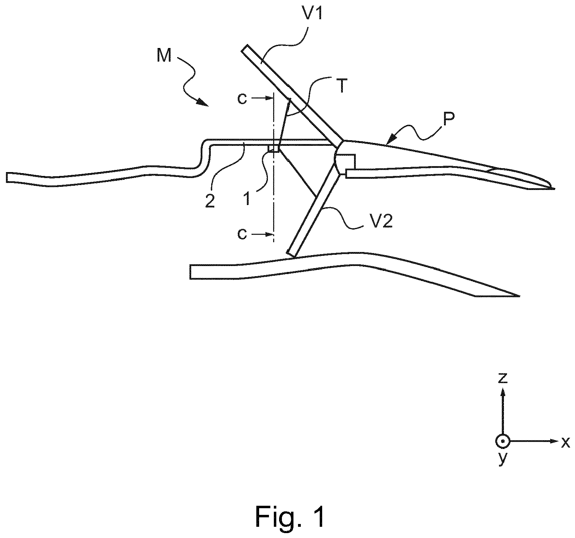

La figure 1 représente un ensemble de volets mis en œuvre dans un dispositif inverseur de poussée équipant un groupe propulsif d'aéronef. L'ensemble représenté comporte un premier V1 et un deuxième V2 pouvant être conjointement positionnés soit dans une position fermée (non représentée) dans laquelle ils sont alignés avec la paroi P d'une nacelle du groupe propulsif, soit dans une position ouverte, dans laquelle les volets découvrent des ouvertures ménagées dans la nacelle et orientent une part du flux secondaire du groupe propulsif vers l'extérieur et en arrière.

Un mécanisme d'actionnement M permet de faire passer les volets V1, V2 de la position fermée à la position ouverte et inversement. Le mécanisme d'actionnement comporte une tringle T par volet, chaque tringle étant liée en rotation à l'une de ses extrémités à un volet et à l'autre de ses extrémités au chariot 1 d'une glissière. Le chariot 1 est configuré pour être le long d'un guide 2, selon le principe de fonctionnement même d'une glissière. Le guide 2 est en l'occurrence un guide linéaire, droit, le long duquel le chariot 1 peut se translater.

Par convention, on considère dans l'ensemble du présent document que le chariot est mobile dans une direction dite longitudinale (x), qui est la direction générale d'extension du guide 2. Un repère tridimensionnel orthogonal est formé, définissant outre la direction longitudinale (x), une direction transversale (y) et une direction conventionnellement dite direction verticale (z).

Ainsi, le mouvement du chariot 1 de la glissière assure l'ouverture ou la fermeture concomitante des volets V1, V2.

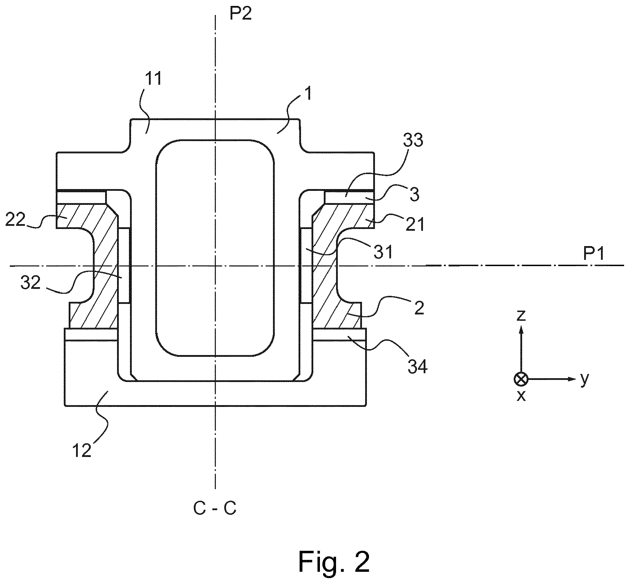

Cette fonction est traditionnellement remplie à l'aide d'une glissière conventionnelle, par exemple une glissière telle que représentée à la figure 2 et qui est décrite plus en détails ci-après. Dans la mesure où une très grande fiabilité est requise pour un tel mécanisme d'actionnement M, ce mécanisme constitue une application privilégiée pour une glissière conforme à la présente invention. Néanmoins, une glissière conforme à l'invention peut avoir de nombreuses autres applications, notamment dans le domaine aéronautique. Elle peut être employée par exemple dans tout mécanisme d'actionnement de volets. Par volet on entend toute surface mobile externe d'un aéronef, tel qu'une trappe ou un système de commande de l'aéronef. Une glissière conforme à l'invention peut avantageusement remplacer toute glissière traditionnelle à frottement sec, voire toute glissière quel que soit son type.

La figure 2 représente, selon une vue schématique en coupe transversale (selon le plan de coupe C-C représenté à la figure 1), un exemple de glissière à frottement sec conforme à l'art antérieur. La glissière comporte un chariot 1 et un guide 2. Le guide 2 comporte un ensemble de deux rails parallèles, à savoir un premier rail 21 et un deuxième rail 22. Le chariot 1 est maintenu transversalement entre le premier rail 21 et le deuxième rail 22. Le chariot 1 enserre verticalement le guide 2. Le chariot 1 est ainsi maintenu fixe dans la direction transversale (y) et dans la direction verticale (z) vis-à-vis du guide 2. A contrario, une translation longitudinale du chariot 1 vis-à-vis du guide 2 est possible, sur tout ou partie de la longueur dudit guide 2. Afin de permettre le bon maintien du chariot 1 dans la direction transversale (y) et dans la direction verticale (z), avec un faible jeu par rapport au guide, et pour permettre également une translation aisée du chariot dans la direction longitudinale (x), des patins 3 sont interposés entre le chariot 1 le guide 2.

Dans l'exemple représenté, le chariot 1 comporte une partie supérieure 11 et une partie inférieure 12.

Les patins 3 sont avantageusement formés dans un matériau autolubrifiant, peu sensible à l'usure par frottements. Les matériaux envisageables sont nombreux, notamment des matériaux métalliques ou des alliages métalliques (bronze, cuivre, étain, etc.), des matériaux à base de graphite ou chargés en graphite, des matériaux plastiques (nylon, acétal, polytétrafluoroéthylène), ou tout matériau revêtu d'un revêtement autolubrifiant.

Les patins 3 sont liés soit au chariot 1, soit au guide 2, soit interposés librement entre le chariot 1 et le guide 2. Chaque patin 3 présente une surface qui est destinée à être en appui sur une surface de contact sur laquelle le patin 3 peut glisser. La surface de contact correspondant à chacun des patins 3 peut ainsi être une surface du chariot 1, ou une surface du guide 2.

Dans l'exemple ici représenté, la glissière comporte six patins, répartis symétriquement selon deux plans, à savoir un plan horizontal P1 parallèle à la direction longitudinale (x) et la direction transversale (y) et un plan médian P2 parallèle à la direction longitudinale (x) et la direction verticale (z), le premier rail 21 et le deuxième rail 22 étant équidistants du plan médian P2.

Un premier patin 31 est interposé entre le chariot 1 et une surface de contact verticale du premier rail 21. Un deuxième patin 32 est interposé entre le chariot 1 et une surface de contact verticale du deuxième rail 22. Le chariot 1 est ainsi maintenu selon la direction transversale (y).

Un troisième patin 33 est interposé entre le chariot 1 et une première surface de contact horizontale du premier rail 21. Un quatrième patin 34 est interposé entre le chariot 1 et une deuxième surface de contact horizontale du premier rail 21, les surfaces de contact ayant des orientations opposées. Le chariot 1 est ainsi maintenu selon la direction verticale (z). Deux autres patins sont disposés de manière similaire, symétriquement vis-à-vis du plan médian P2.

Corolairement, le chariot est maintenu en rotation.

La glissière est généralement orientée de sorte qu'en utilisation, le charriot subit, outre les contraintes longitudinales, essentiellement des contraintes verticales. Néanmoins, il est parfois impossible d'obtenir une répartition homogène des efforts entre les patins 3, notamment une répartition symétrique. Il peut en résulter une usure prématurée des patins 3 les plus contraints (comparativement aux autres patins). Dans ce cas, les jeux mécaniques entre le patin usé et la surface de contact correspondante augmentent. Une usure importante limite la précision du guidage du charriot 1, et la fiabilité de la glissière peut être remise en cause. En premier lieu, des points durs peuvent apparaitre, c'est-à-dire des positions de la glissière dans lesquelles la force nécessaire à la translation du chariot connaît des variations. Dans des situations extrêmes, notamment lorsque l'usure des patins n'est pas homogène, la glissière peut se bloquer, du fait d'un arc-boutement du chariot 1 vis-à-vis du guide 2.

Avant même que de tels phénomènes apparaissent, un remplacement des patins - ou de la glissière - doit être effectué. L'usure des patins entraine donc la problématique corolaire du contrôle de cette usure et du bon fonctionnement des glissières.

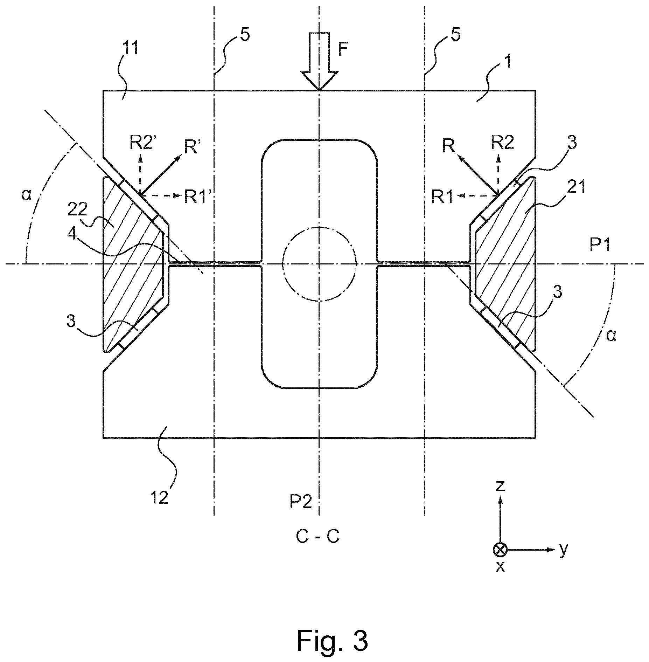

La figure 3 représente, selon une vue schématique en coupe analogue à celle de la figure 2, une glissière conforme à un mode de réalisation de l'invention.

Tout comme la glissière représentée à la figure 2, un charriot 1 est destiné à se translater le long d'un guide 2 comportant un premier rail 21 et un deuxième rail 22.

Des patins 3 sont interposés entre le charriot 1 et le guide 2. Les patins 3 peuvent avoir une constitution similaire aux patins décrits en référence à la figure 2. Ils peuvent être liés (ou non), au chariot 1 ou au guide 2. Les patins 3 sont en outre en contact avec une surface de contact du guide 2 ou du charriot 1 sur laquelle ils glissent lors de la translation du chariot 1. Dans le mode de réalisation représenté, les patins sont liés au chariot 1 et les surfaces de contact sont ménagées sur les rails 21, 22 du guide 2.

Dans ce mode de réalisation, la glissière comporte quatre patins 3. La glissière objet de l'invention peut présenter plus de quatre patins dans le plan de coupe C-C. La glissière objet de l'invention peut présenter plusieurs ensembles de patins répartis longitudinalement entre le chariot et le guide 2. Par exemple, des patins répartis de manière similaire à la répartition présentée à la figure 3 peuvent être présents dans plusieurs plans de coupe transversaux de la glissière, répartis longitudinalement.

Les patins 3 sont répartis symétriquement vis-à-vis du plan horizontal P1 et du plan médian P2.

La glissière est en outre configurée de sorte que les surfaces de contact sont orientées vis-à-vis du plan horizontal P1 selon un angle α compris entre 30° et 70°. Avantageusement, les pentes formées par les surfaces de contact sont orientées vers l'intérieur de la glissière, c'est-à-dire en direction du plan médian P2 ou, dans l'exemple représenté, entre les deux rails 21, 22. Chacun des rails 21, 22, peut ainsi présenter une section transversale sensiblement trapézoïdale (la petite base du trapèze étant parallèle au plan médian P2 et plus proche du plan médian que sa grande base).

La présence d'un tel angle permet une répartition plus homogène des contraintes dans la glissière. A titre d'exemple, on a représenté une force F exercée verticalement sur le chariot 1. Une telle orientation est représentative de l'orientation des forces majoritaires s'exerçant généralement dans la glissière lors de son fonctionnement (en plus de la force longitudinale qui permet le mouvement du chariot). La force F sera reprise au niveau des surfaces de contact inclinées. Il en résulte une force de réaction opposée et égale à la force F qui est la résultante d'une première force de réaction R orthogonale à la surface de contact du premier rail 21 et d'une deuxième force de réaction R' orthogonale à la surface de contact du deuxième rail 22. Pour obtenir l'équilibre entre la force F et les forces de réaction R, R', la force de réaction R comporte une composante transversale R₁ qui est égale et opposée à une composante transversale R₁' de R', et la force de réaction R comporte une composante verticale R₂ qui s'ajoute à une composante verticale R₂' de R', de sorte que la résultante verticale s'oppose et annule la force F.

Les composantes transversales R₁ et R₁' ont pour effet de recentrer le chariot vis-à-vis du plan médian P2, ce qui garantit en outre que R et R' sont de même valeur (c'est-à-dire de même module, selon une représentation vectorielle classique des forces).

L'exemple ci-dessus correspond à une force F verticale exercée au milieu du chariot 1, tant transversalement que longitudinalement. Si la force F est exercée selon une direction différente, et/ou avec une composante tendant à faire basculer le chariot 1 (par exemple autour d'un axe orienté selon la direction transversale (y) ou la direction longitudinale (x)), les contraintes sont réparties, selon la force de réaction à opposer à la force F, entre les quatre patins de la glissière.

Selon une configuration permettant une répartition la plus homogène possible des contraintes dans une majorité de cas de figures (c'est-à-dire avec des contraintes appliquées diverses), une orientation à 45° des surfaces de contact vis-à-vis du plan horizontal P1 peut être employée.

Le chariot 1 comporte deux parties, à savoir une partie supérieure 11 et une partie inférieure 12. Les qualificatifs « supérieure » et « inférieure » sont adoptés dans la mesure où ces parties sont réparties selon la direction verticale (z), mais ne préjugent en rien de l'orientation dans l'espace de la glissière. Dans l'exemple ici représenté, la partie supérieure 11 et la partie inférieure 12 sont symétriques vis-à-vis du plan horizontal P1.

La partie supérieure 11 et la partie inférieure 12 sont liées entre elles rigidement par des moyens de liaison d'un type connu dans l'état de la technique, tels que des vis 5 (représentés conventionnellement par un trait mixte à la figure 3) ou des goujons. Lorsque la partie supérieure 11, et respectivement la partie inférieure 12 sont configurées de sorte que lorsqu'elles sont en appui sur le guide 2 via les patins 3, un espace 4 résiduel existe entre elles. Cela permet d'exercer une précontrainte dans le dispositif, de sorte que le chariot 1 enserre les rails 21, 22 du guide 2 avec ladite précontrainte. La précontrainte correspond à une force selon la direction verticale tendant à rapprocher la partie supérieure 11 et la partie inférieure 12 l'une de l'autre. La précontrainte crée des forces de réaction à la précontrainte au niveau des surfaces de contact. Les forces de réaction à la précontrainte s'équilibrent et tendent à centrer le chariot 1 sur le plan médian P2, ainsi que vis-à-vis du plan horizontal P1. La précontrainte annule ainsi tout jeu mécanique dans la glissière et participe aussi à la répartition homogène des contraintes exercées sur le chariot 1 dans les patins 3 de la glissière.

Une glissière ainsi constituée présente en outre un avantage important pour ce qui concerne le contrôle et le suivi de l'usure des patins. Dans la mesure où l'usure est relativement homogène entre les patins, la mesure de la force de précontrainte et plus particulièrement de son évolution est un indicateur très pertinent de l'usure des patins. Ainsi, une usure des patins va permettre un léger rapprochement entre la partie supérieure 11 et la partie inférieure 12, qui relâche la tension (créer par déformation élastique) dans les vis 5 et diminue d'autant la précontrainte.
Pour mesurer la force de contrainte ou son évolution, au moins l'une des vis (ou autre moyen de liaison employé entre les parties du chariot 1) peut être instrumentée. En particulier, une vis de type instrumenté comporte un capteur permettant de caractériser la tension mécanique dans la vis, qui correspond à la force que la vis exerce sur les pièces qu'elle lie.
Alternativement d'autres capteurs peuvent être employés, par exemple un capteur de force de type rondelle. Un tel capteur est interposé entre une tête de vis et une pièce de l'ensemble assemblé par ladite vis (ou, alternativement entre un écrou monté sur une vis ou un goujon et une pièce de l'ensemble assemblé par ledit goujon).
Par ailleurs, il est avantageux de maintenir une valeur de précontrainte dans une plage adéquate tant que l'usure des patins n'est pas excessive. Une précontrainte trop importante lorsque le système est neuf en augmente les frottements, et favorise donc son usure, mais une précontrainte trop faible pourrait résulter dans l'apparition de jeux dans la glissière ou dans une difficulté à caractériser la diminution de ladite précontrainte. Afin de compenser l'usure des patins tant qu'elle reste acceptable (c'est-à-dire sans risque pour le bon fonctionnement de la glissière), il est ainsi avantageux de garantir une certaine élasticité dans les moyens de liaison employés entre la partie supérieure 11 et la partie inférieure 12. En premier lieu, des moyens de liaison adaptés peuvent être employés (par exemple des vis ou goujons présentant un module d'élasticité approprié). En alternative ou en complément, les moyens de liaison peuvent être équipé d'un ressort de précontrainte. Le ressort de précontrainte peut notamment être formé d'une rondelle élastique, d'un type connu dans l'état de la technique.
L'invention ainsi développée permet en premier lieu l'obtention d'une glissière à frottement sec fiable, dans laquelle l'usure des patins est régulière et homogène malgré des sollicitations mécaniques potentiellement irrégulières. Le risque de défaillance importante de la glissière est en outre réduit. Grâce à sa configuration particulière, une glissière conforme à l'invention favorise un suivi aisé et/ou automatisé de l'usure des patins. Comme toute glissière à frottement sec, l'objet de l'invention est adapté à fonctionner dans des environnements agressifs, ou en présence de contaminants.

## Revendications

1. Glissière à frottement sec comportant un chariot (1), un guide (2) s'étendant dans une direction longitudinale (x), et des patins (3) interposés entre le chariot (1) et le guide (2) de sorte à permettre la translation du chariot selon la direction longitudinale (x) par glissement relatif des patins (3) sur des surfaces de contact planes du chariot (1) ou du guide (2), tout en maintenant ledit chariot (1) fixe dans une direction transversale (y) et dans une direction verticale (z),
la direction longitudinale (x), la direction transversale (y) et la direction verticale (z) étant orthogonales entre elles,
les surfaces de contact étant réparties symétriquement de part et d'autre de deux plans, à savoir un plan horizontal (P1) parallèle à la direction longitudinale (x) et la direction transversale (y) et un plan médian (P2) parallèle à la direction longitudinale (x) et la direction verticale (z)
**caractérisée en ce que**,
le chariot (1) enserre verticalement le guide (2) et les surfaces de contact sont orientées de sorte à former un angle (a) compris entre 30° et 70° avec ledit plan horizontal (P1).

2. Glissière selon la revendication 1, dans laquelle les surfaces de contact sont au nombre de quatre.

3. Glissière selon la revendication 1 ou la revendication 2, dans laquelle le guide (2) comporte deux rails (21,22) parallèles longitudinaux.

4. Glissière selon l'une des revendications précédentes, dans laquelle le chariot (1) comporte une partie supérieure (11) et une partie inférieure (12) liées entre elles par des moyens de liaison configurés de sorte à exercer une force de précontrainte selon la direction verticale tendant à rapprocher la partie supérieure (11) et la partie inférieure (12) l'une de l'autre, le guide (2) étant interposé entre ladite partie supérieure (11) et ladite partie inférieure (12).

5. Glissière selon la revendication 4, dans laquelle la partie supérieure (11) et la partie inférieure (12) sont symétriques selon ledit plan horizontal (P1).

6. Glissière selon la revendication 4 ou la revendication 5, comportant un capteur permettant de mesurer la force ou de caractériser l'évolution de la force de précontrainte.

7. Glissière selon la revendication 6, dans laquelle la partie supérieure (11) et la partie inférieure (12) sont liées par au moins une vis (5) ou un goujon, la vis (5) ou le goujon étant du type instrumenté de sorte à former un capteur de force, ou étant équipé d'un capteur de force de type rondelle.

8. Glissière selon l'une des revendications 4 à 7, dans lequel les moyens de liaison sont équipés d'un ressort de précontrainte, par exemple d'une rondelle ressort.

9. Glissière selon l'une des revendications précédentes, dans laquelle les surfaces de contact sont orientées de sorte à former un angle d'environ 45°avec ledit plan horizontal.

10. Mécanisme d'actionnement (M) d'un volet mobile (V1,V2) d'aéronef comportant une glissière selon l'une des revendications précédentes.
